# EUROPEAN PATENT SPECIFICATION

(11) **EP 2 238 345 B1**
(45) Date of publication and mention of the grant of the patent: **01.06.2011**
(21) Application number: 08865869.5
(22) Date of filing: 18.12.2008
(51) Int. Cl.: F03D 11/00

(54) **A WIND TURBINE GENERATOR WITH A HEAT EXCHANGER**
WINDTURBINENGENERATOR MIT WÄRMETAUSCHER
AÉROGÉNÉRATEUR À ÉCHANGEUR DE CHALEUR

(30) Priority: 21.12.2007 DK 200701859; 21.12.2007 US 15832
(43) Date of publication of application: 13.10.2010
(73) Proprietor: Vestas Wind Systems A/S, 8940 Randers - SV (DK)
(72) Inventor: JENSEN, Martin Villy Reinbach Skov, DK-8450 Hammel (DK)
(74) Representative: Plougmann & Vingtoft A/S
(86) International application number: PCT/DK2008/050320
(87) International publication number: WO 2009/080043

(56) References cited:
- EP-A- 1 496 251
- WO-A-2007/051464
- DE-A1- 10 324 228
- DE-A1- 19 644 355

## Description

### FIELD OF THE INVENTION

The present invention relates to a wind turbine generator comprising a heat exchanger and a first and second cooling circuit for cooling a heat-generating source in the wind turbine generator, e.g. a gear-box or a generator. The invention also relates to heat exchanger for general purposes and a method for cooling a heat-generating source with such a heat exchanger.

### BACKGROUND OF THE INVENTION

Normally, a wind turbine generator (WTG) has one or more rotor blades which are rotatable around a horizontal axis mounted in a nacelle. The nacelle is pivotable around a vertical axis in order to turn the rotor blade into a suitable aligned position with the wind direction. The one or more rotor blades is rotated at a speed which is depending on the wind and the aerodynamics of the rotor blades in order to drive a generator for converting wind energy into electric energy. Typically, the generator is connected to the rotor blades by intermediate gearbox, which is arranged for stepping up the inherently low rotational speed of the rotor blades into a higher level of rotation.

Both the gearbox and the generator for converting the wind energy into electric energy loss energy in the form of heat. Other electric components such as inverters and transformers are also generating heat in the WTG. Similarly, mechanical components like for instance bearings can generate undesirable amounts of heat. This excess heat from various heat-generating sources in the WTG must somehow be dissipated into the surroundings of the WTG in order to ensure a stable and prolonged operation of the WTG.

Previous solutions for cooling the heat-generating components of a WTG include air cooled ventilation systems and water cooled systems. Nevertheless, these systems are either too complicated for practical implementation, or unable to provide a sufficient and reliable cooling of the heat-generating components in the WTG. With the current trend of locating wind turbine generators in remote places and/or under harsh conditions (e.g. off-shore), the need for improved cooling systems is immediate. In particular, the cooling systems should preferably be relative compact in order to allow space for other components in the nacelle of the wind turbine generator.

WO 2007/051464, which is considered as the closest prior art, discloses a wind turbine according the preamble of claim 1.

Hence, an improved wind turbine generator would be advantageous, and in particular a more efficient and/or reliable cooling system for a wind turbine generator would be advantageous.

### OBJECT OF THE INVENTION

It is a further object of the present invention to provide an alternative to the prior art.

In particular, it may be seen as an object of the present invention to provide a wind turbine generator that solves the above mentioned problems of the prior art with cooling of heat-generating sources in the wind turbine generator.

### SUMMARY OF THE INVENTION

Thus, the above described object and several other objects are intended to be obtained in a first aspect of the invention by providing a wind turbine generator comprising;
- a heat-generating source,
- a primary cooling circuit, the primary cooling circuit being a closed cooling circuit arranged for circulating a first fluid between the heat-generating source and a heat exchanger, and
- a secondary cooling circuit, the secondary cooling circuit being arranged for intake of a second fluid into the heat exchanger,
wherein the heat exchanger comprises a plurality of pipes for conveying the second fluid from the secondary cooling circuit through the heat exchanger, the plurality of substantially parallel pipes being arranged for heat exchange with a flow of the first fluid from the primary cooling circuit, and
wherein the secondary cooling circuit further comprises a dispersion chamber connected to the plurality of pipes, the dispersion chamber having a fluid intake being positioned sideways relative to the plurality of pipes so as to provide, at least partly, a levelling of the flow distribution across the plurality of pipes of the second fluid prior to heat exchange.

The invention is particularly, but not exclusively, advantageous for obtaining an improved heat exchanger in the WTG by providing a more uniform or levelled flow distribution in the plurality of pipe where the second fluid performs heat exchange with the first fluid. By levelling the flow of the second fluid, e.g. cooling air or a cooling liquid, the plurality of pipes is more effectively utilised. Preliminary tests and fluid dynamic model studies performed by the present applicant indicate that hitherto the flow distribution of many cooling systems were inadequate or at least not fully exploited.

Furthermore, the present invention provides for a relatively compact heat exchanger with a high heat exchange per volume. This is of the outmost importance in a nacelle of a WTG, where the allowable space is a precious resource.

It should be understood in context of the present invention that the sideways positioning of the fluid intake of the dispersion chamber relative to the plurality of pipes means that the intake is positioned on or in a side of the dispersion chamber relative to the direction of the parallel oriented pipes connected to the dispersion chamber. Thus, the intake is for instance not positioned directly in front of the pipes. This will also be further explained in the detailed description below.

In one embodiment, the dispersion chamber may be arranged for diverting the second fluid from a first flow direction, which is non-parallel to plurality of pipes, and into a second flow direction which corresponds to the direction of the plurality of pipes. This provides a very effective way of levelling the flow distribution without substantially jeopardising the flow resistance through the dispersion chamber.

In another embodiment, the plurality of pipes may be substantially orthogonal arranged to, at least a part of, the flow of the first fluid through the heat exchanger. This provides for an optimum heat exchange if the two fluids. It should be mentioned that the first fluid typically has a range of directions within the heat exchanger.

In yet another embodiment, a cross-section of the plurality of pipes, orthogonal to the flow direction, forms a shape spanned by two dimensions may have un-even lengths, and that the intake of the dispersion chamber may further be positioned next to the shorter of the two dimensions. Thus, for a rectangular cross-section it could be height and width, and so forth. The ratio between longer and the shorter of the two uneven dimensions could be at least 1.5, 2, 3, 4, 5, or 6. Additionally, the flow direction of the second fluid prior to entering the pipes may be substantially along the longer of the two dimensions.

Preferably, the fluid intake into the dispersion chamber may be positioned outside of a direct flow direction corresponding to the orientation of the plurality of pipes in order to provide a longer path way through the dispersion chamber and thereby increase levelling of the flow distribution of the second flow. Furthermore, the said fluid intake may be further oriented substantially parallel to the said plurality of pipes, the flow through the second circuit thereby forming a substantially orthogonal flow pattern prior to intake into the plurality of pipes of the heat exchanger in order to provide an even more efficient levelling of the flow distribution of the second flow

In an embodiment, the inlet of the primary cooling circuit into the heat exchanger is located in an opposite position relative to the outlet of the primary cooling circuit from the heat exchanger with respect to the dispersion chamber, e.g. the inlet may be positioned below or above the core of the heat exchanger and outlet above the above or below, respectively, the core the heat exchanger, where the core may be defined by the centre of the plurality of pipes.
Typically, the first and/or the second fluid may be comprised in a group of: air, an inert gas, and a cooling liquid. An optimum cooling fluid has a high thermal capacity, a low viscosity, and a chemical inertness.

In an embodiment, the second fluid may be a gas being forced through the secondary cooling circuit by gas motion means, e.g. pumps.

In order to optimize the heat exchanger, a mean ratio (F) between an inter-distance (L_c) between the plurality of pipes and a diameter (D_O) of the pipe may be in the interval from approximately 1.1 to approximately 1.4, or in the interval from approximately 1.2 to approximately 1.3.

In a second aspect, the present invention relates to a method for cooling a heat-generating source in a wind turbine generator, the method comprising:
- providing a primary cooling circuit, the primary cooling circuit being a closed cooling circuit arranged for circulating a first fluid between the heat-generating source and a heat exchanger, and
- providing a secondary cooling circuit, the secondary cooling circuit being arranged for intake of a second fluid into the heat exchanger,
wherein the heat exchanger comprises a plurality of pipes for conveying the second fluid from the secondary cooling circuit through the heat exchanger, the plurality of substantially parallel pipes being arranged for heat exchange with a flow of the first fluid from the primary cooling circuit, and
wherein the secondary cooling circuit further comprises a dispersion chamber connected to the plurality of pipes, the dispersion chamber having a fluid intake being positioned sideways relative to the plurality of pipes so as to provide, at least partly, a levelling of the flow distribution across the plurality of pipes of the second fluid prior to heat exchange.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
Figure 1 is a schematic cross-sectional drawing of a wind turbine generator (WTG) according to the present invention,
Figure 2 is a schematic drawing of the primary and the secondary cooling circuit and the heat exchanger according to the present invention,
Figure 3 is a schematic top view of the fluid flow through the heat exchanger according to the present invention,
Figure 4 is a perspective drawing of a heat exchanger according to the present invention,
Figure 5 is a schematic side-view of the intake of the dispersion chamber and the heat exchanger as seen along the plurality of pipes,
Figure 6 is schematic top view of heat exchanger indicating the fluid flows, and
Figure 7 is a flow chart of a method according to the invention.

### DETAILED DESCRIPTION OF AN EMBODIMENT

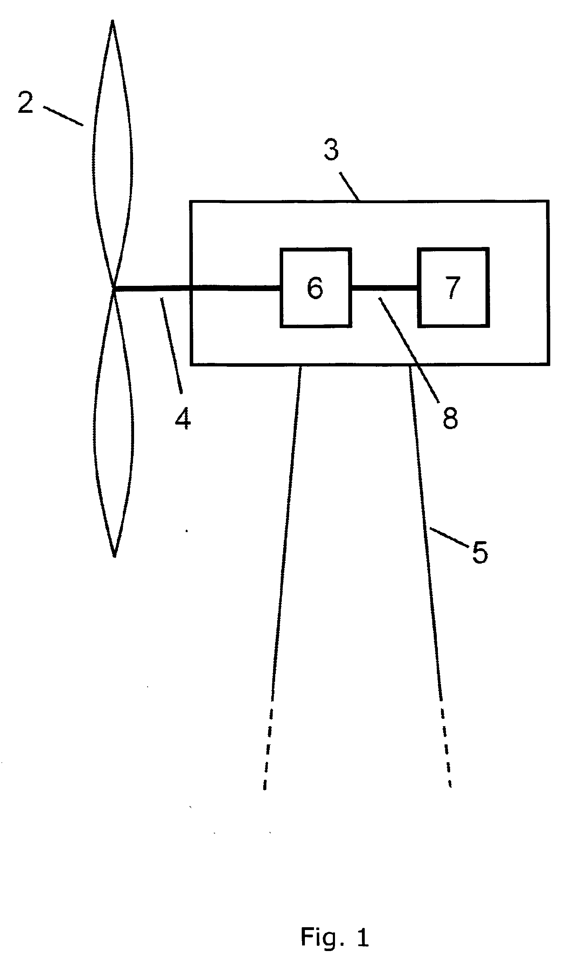

Figure 1 is a schematic cross-sectional drawing of a wind turbine generator (WTG) 1 according to the present invention. The WTG 1 comprises one or more rotatable mounted blades 2 connected to the nacelle 3 via a first rotatable shaft 4. The nacelle 3 is pivotably mounted on an upper portion of a tower 5. The first shaft 4 is further connected to a gearbox 6 that shifts the low rotational speed of the blades 2 significantly up and transmits the higher rotational speed via a second shaft 8 to the generator 7 where the rotational energy is converted electromagnetically into electric energy. Typical rotational speeds of the first shafts are 10-20 rounds per minute (RPM) and 1000-1500 RPM for the second shaft 8. This high gear exchange in the gearbox 6 may require cooling. The generator 7 similarly requires cooling. In the embodiments below, the present invention will be further explained with reference to the gearbox 6 and the generator 7, but the teaching of the present invention may readily be extended to other heat-generating sources in a WTG 1.

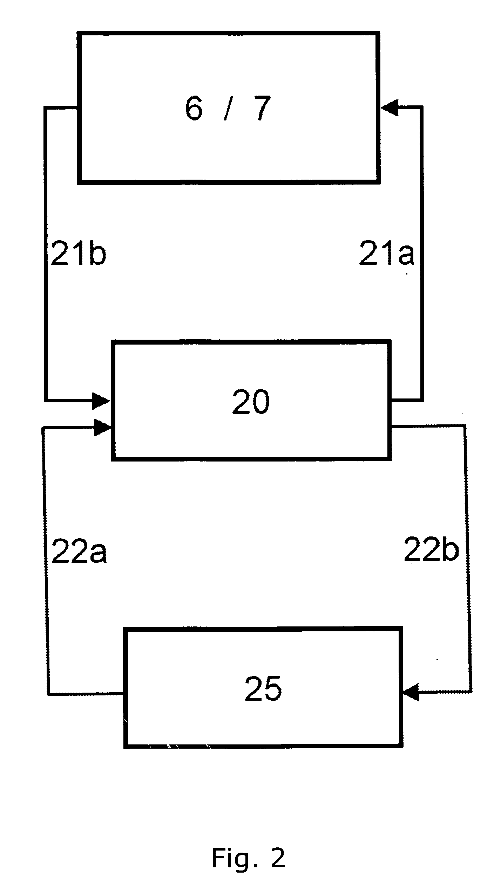

Figure 2 is a schematic drawing of the primary and the secondary cooling circuit and the heat exchanger 20 according to the present invention. These components may form part of a cooling system in a WTG 1. The heat-generating source 6 or 7 is coupled into the primary cooling circuit with a fluid conduct 21a supplying a cooled first fluid to the heat source 6 or 7. After heat exchange with the heat source 6 or 7, the first fluid has an increased temperature and, thus, transports heat away from the source 6 or 7 via conduct 21b.

The primary cooling circuit is a closed cooling circuit arranged for circulating a first fluid from the heat-generating source 6 or 7 to a heat exchanger 20 so that the first fluid may be cooled down again for additional recirculation. The primary circuit is closed in order to protect the heat-generating source 6 or 7 from external influence, e.g. dust, humidity, salts in the atmosphere or other contaminations. Without being limited to this specific embodiment, the first fluid will be taken be a gas.

The secondary cooling circuit is arranged for intake of a second fluid into the heat exchanger 20 so as to transport heat delivered by the first fluid away from the heat exchanger 20. The second fluid is transported to the heat exchanger 20 via fluid conduct 22a. Afterwards the second fluid is conveyed to a cooling reservoir 25.

The secondary circuit may be closed, e.g. with a cooling liquid or a cooling gas. In that case the cooling reservoir 25 may be e.g. cooling fans mounted externally on the nacelle 3 or similar.

Alternatively, the secondary circuit may be an open circuit using air from the exterior of the WTG 1. In that case the cooling reservoir 25 is the atmosphere surrounding the WTG 1. Without being limited to this specific embodiment, the secondary circuit will be an open circuit, and the second fluid will be taken be air.

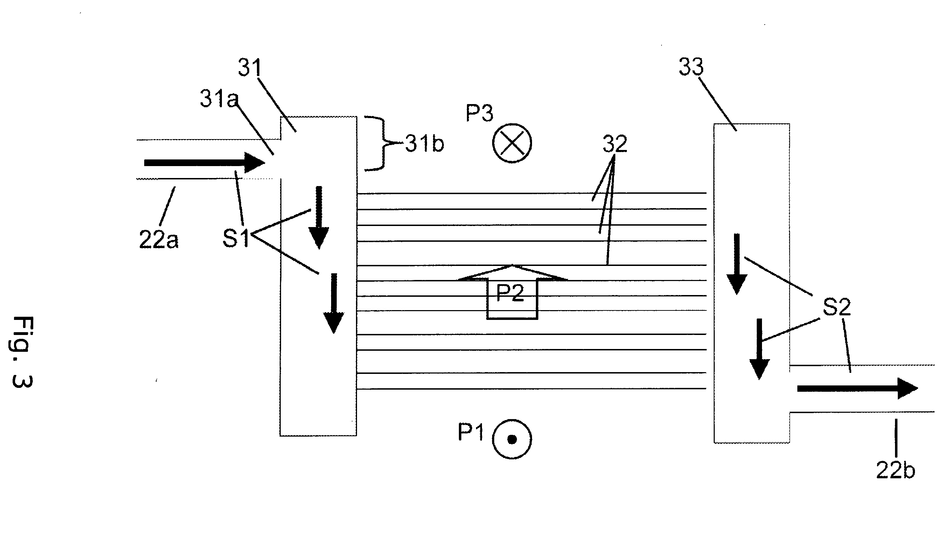

Figure 3 is a schematic top view of the fluid flow through the heat exchanger 20 according to the present invention. The heat exchanger 20 comprises a plurality of pipes 32 for conveying the second fluid from the secondary cooling circuit 22a through the heat exchanger 20. For purely illustrative purposes only six pipes 32 are drawn in Figure 3, the number of pipes 32 is typically significantly higher during practical implementation.

The pipes 32 are arranged for facilitating heat exchange with a flow P1, P2, and P3 of the first fluid from the primary cooling circuit. The first fluid initially flows out of the Figure plane as indicated by P1, and traverse past the pipes 32 as schematically shown by the arrow P2. Finally, the first fluid is conveyed downwards as indicated by P3.

The secondary cooling circuit comprises a dispersion chamber 31 which is connected for fluid communication with the plurality of pipes 32. The second fluid through is indicated by bold arrow S1 and S2 on the left and right side, respectively, of the heat exchanging pipes. On the right side in the Figure, the second fluid is collected in a chamber 32 and conveyed out of the heat exchanger 20 via conduct 22b.

The dispersion chamber 31 has a fluid intake 31a which is positioned sideways relative to the plurality of pipes 32 i.e. the intake is provided in an extension of the chamber 31, the extension is protruding beyond a region defined by the flow direction of the second fluid through the pipes 32. Thus, the dispersion chamber 31 is arranged for diverting the second fluid from a first flow direction, which is non-parallel to plurality of pipes, and into a second flow direction which corresponds to the direction of the plurality of pipes 32. In this embodiment, the first flow direction is thus substantially orthogonal to the second flow direction. Notice also that the fluid intake 31a is further oriented substantially parallel to the said plurality of pipes 32, the flow S1 through the second circuit thereby forming a substantially orthogonal flow pattern S1 prior to intake into the plurality of pipes 32 of the heat exchanger.

Thereby, the second fluid is provided, at least partly, with a levelling of the flow distribution across the plurality of pipes 32 prior to heat exchange with first fluid. The intake 31a may be positioned in other positions on the side or in the side of dispersion chamber 31 i.e. a position in the upper region 31b as indicated. Accordingly, the intake 31a is positioned outside of a direct flow direction of the plurality of pipes 32.

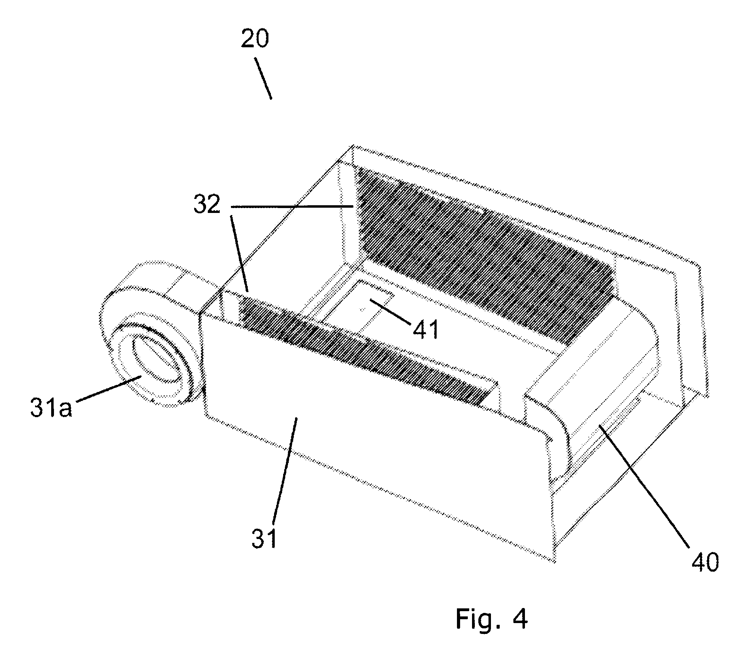

Figure 4 is a perspective drawing of a heat exchanger 20 according to the present invention showing similar parts as Figure 3. The dispersion chamber 31 is also shown in front of the pipes 32, the chamber 31 being integrated into the heat exchanger 20. Only the inlet and outlet parts of the pipes 32 are shown for clarity in the drawing. Also shown are the inlet 40 and outlet 41 for the first fluid allowing the first fluid to pass the pipes 32 and thereby perform heat exchange with the second fluid in the pipes 32. In this embodiment, the inlet of the primary cooling circuit into the heat exchanger is located in an opposite position relative to the outlet of the primary cooling circuit from the heat exchanger with respect to the dispersion chamber, e.g. the inlet 40 may be positioned above the core of the heat exchanger and outlet 41 below the core the heat exchanger, where the core may be defined by a centre of the plurality of pipes. Also, the inlet and the outlet to the of primary circuit may be said to be positioned on opposing sides of the heat exchanger relative to the dispersion chamber; i.e. right versus left, and above versus below, etc.

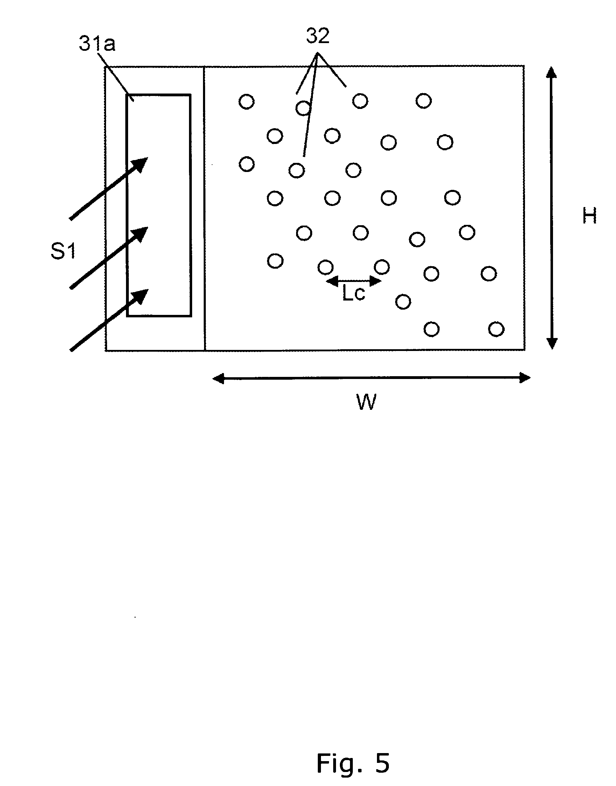

Figure 5 is a schematic side-view of the intake 31a of the dispersion chamber 31 and the heat exchanger 20 as seen along the plurality of pipes 32. The fluid intake 31a is schematically shown to the left of the pipes 32 with a first fluid flowing into the dispersion chamber as indicated by arrows S1.

A cross-section of the plurality of pipes forms a rectangular shape spanned by two un-even dimensions, i.e. a width W and a height H. The intake 31a of the dispersion chamber 31 is positioned next to the shortest of the two dimensions which is seen to be the height H in Figure 5, thus the chamber 31 and the intake 31a is positioned on the side of the plurality of pipes 32 in order to provide the most efficient levelling of the flow distribution along the width W of the heat exchanger 20.

In Figure 5, the inter-distance Lc between pipes 32 is also shown. In a preferred embodiment, a mean ratio, F, between this inter-distance Lc between the plurality of pipes 32 and a diameter D_O of a pipe, is in the interval from approximately 1.1 to approximately 1.4, or in the interval from approximately 1.2 to approximately 1.3. Often F around 1.25 is used as an appropriate compromise between the highest heat exchange and the lowest flow resistance through the pipes. It should be noted that the heat exchange is critically dependent on this ratio, F.

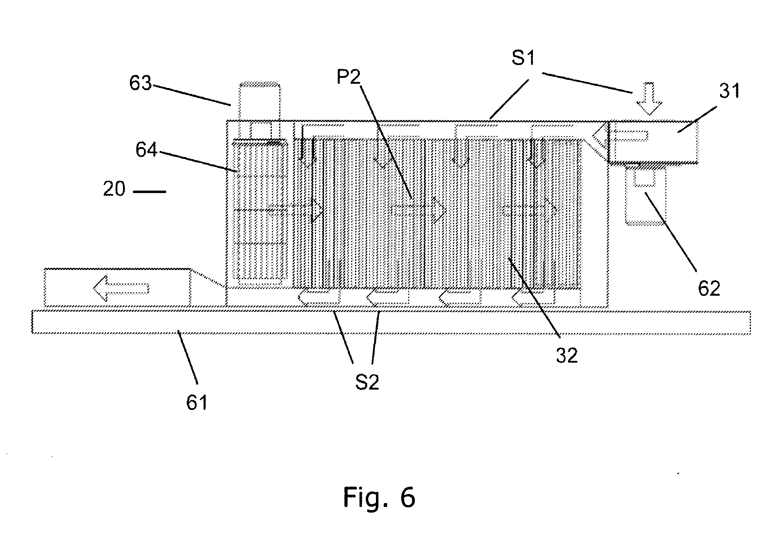

Figure 6 is schematic top view of heat exchanger 20 indicating the fluid flows through the heat exchanger 20 similarly to Figure 3. The second fluid flow is indicated by arrows S1 prior to heat exchange in the pipes 32 and by arrows S2 after the heat exchange. The second fluid i.e. air may be streaming along the nacelle wall 61 and subsequently let out in the atmosphere. The air flow into the heat exchanger 20 is driven by a external fan motor 62 which is connected to radial fan wheel (not shown) positioned above the motor 62. Similarly, the first fluid is forced trough the heat exchanger 20, as indicated by arrow P2, with an internal fan motor 63 which is connected to a cross-flow fan wheel 64.

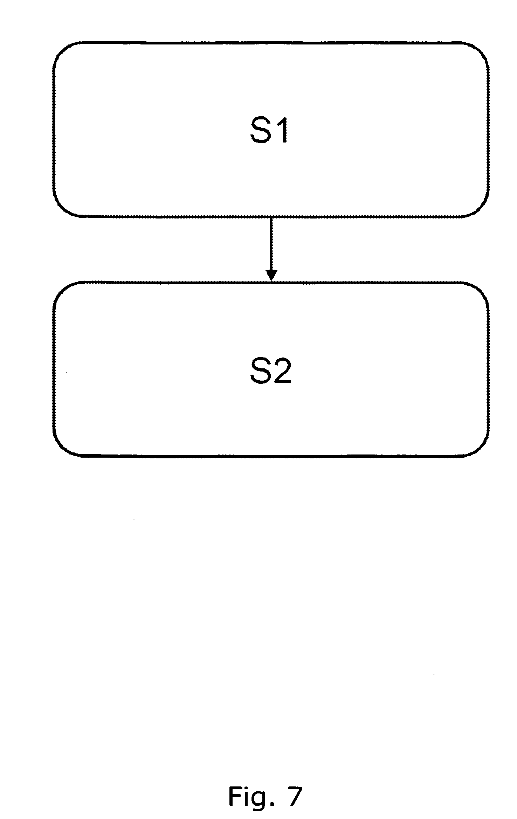

Figure 7 is a flow chart of a method according to the invention for cooling a heat-generating source in a wind turbine generator. The method comprising:
**S1** providing a primary cooling circuit, the primary cooling circuit being a closed cooling circuit arranged for circulating a first fluid between the heat-generating source 6 or 7 and a heat exchanger 20, and
**S2** providing a secondary cooling circuit, the secondary cooling circuit being arranged for intake of a second fluid into the heat exchanger 20,
wherein the heat exchanger 20 comprises a plurality of pipes 32 for conveying the second fluid from the secondary cooling circuit through the heat exchanger 20, the plurality of substantially parallel pipes being arranged for heat exchange with a flow of the first fluid from the primary cooling circuit, and
wherein the secondary cooling circuit further comprises a dispersion chamber 31connected to the plurality of pipes, the dispersion chamber having a fluid intake 31a being positioned sideways relative to the plurality of pipes so as to provide, at least partly, a levelling of the flow distribution across the plurality of pipes 32 of the second fluid prior to heat exchange.

In a third aspect, the present invention may relate to a heat exchanger for cooling of a heat-generating source,
the heat exchanger being arranged for connection with an associated primary cooling circuit, the primary cooling circuit being a closed cooling circuit arranged for circulating a first fluid between the heat-generating source and a heat exchanger,
the heat exchanger further being arranged for connection with an associated secondary cooling circuit, the secondary cooling circuit being arranged for intake of a second fluid into the heat exchanger,
the heat exchanger comprises:
- a plurality of pipes for conveying the second fluid from the secondary cooling circuit through the heat exchanger, the plurality of substantially parallel pipes being arranged for heat exchange with a flow of the first fluid from the primary cooling circuit, and
- a dispersion chamber connected to the plurality of pipes, the dispersion chamber having a fluid intake being positioned sideways relative to the plurality of pipes so as to provide, at least partly, a levelling of the flow distribution across the plurality of pipes of the second fluid prior to heat exchange.

Although the present invention has been described in connection with the specified embodiments, it should not be construed as being in any way limited to the presented examples. The scope of the present invention is set out by the accompanying claim set. In the context of the claim, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A wind turbine generator comprising;
a heat-generating source,
a primary cooling circuit, the primary cooling circuit being a closed cooling circuit arranged for circulating a first fluid between the heat-generating source and a heat exchanger, the wind turbine generator being **characterised in that** it further comprises;
a secondary cooling circuit, the secondary cooling circuit being arranged for intake of a second fluid into the heat exchanger,
wherein the heat exchanger comprises a plurality of pipes for conveying the second fluid from the secondary cooling circuit through the heat exchanger, the plurality of substantially parallel pipes being arranged for heat exchange with a flow of the first fluid from the primary cooling circuit, and
wherein the secondary cooling circuit further comprises a dispersion chamber connected to the plurality of pipes, the dispersion chamber having a fluid intake being positioned sideways relative to the plurality of pipes so as to provide, at least partly, a levelling of the flow distribution across the plurality of pipes of the second fluid prior to heat exchange.

2. A wind turbine generator according to claim 1, wherein the dispersion chamber is arranged for diverting the second fluid from a first flow direction, which is non-parallel to plurality of pipes, and into a second flow direction which corresponds to the direction of the plurality of pipes.

3. A wind turbine generator according to claim 1, wherein the plurality of pipes is substantially orthogonal arranged to, at least a part of, the flow (P1, P2, P3) of the first fluid through the heat exchanger.

4. A wind turbine generator according to claim 1, wherein a cross-section of the plurality of pipes, orthogonal to the flow direction, forms a shape spanned by two dimensions having un-even lengths, the intake of the dispersion chamber being positioned next to the shortest of the two dimensions.

5. A wind turbine generator according to claim 4, wherein the flow direction of the second fluid prior to entering the pipes is substantially along the longest of the two dimensions.

6. A wind turbine generator according to claim 1, wherein the said fluid intake is positioned outside of a direct flow direction corresponding to the orientation of the plurality of pipes.

7. A wind turbine generator according to claim 6, wherein the said fluid intake is further oriented substantially parallel to the said plurality of pipes, the flow through the second circuit thereby forming a substantially orthogonal flow pattern prior to intake into the plurality of pipes of the heat exchanger.

8. A wind turbine generator according to claim 1, wherein the inlet of the primary cooling circuit into the heat exchanger is located in an opposite position relative to the outlet of the primary cooling circuit from the heat exchanger with respect to the dispersion chamber.

9. A wind turbine generator according to claim 1, wherein the first and/or the second fluid are/is comprised in a group of: air, an inert gas, and a cooling liquid.

10. A wind turbine generator according to claim 1, wherein the second fluid is a gas being forced through the secondary cooling circuit by gas motion means.

11. A wind turbine generator according to claim 1, wherein a mean ratio (F) between an inter-distance (L_c) between the plurality of pipes and a diameter (D_O) of the pipe is in the interval from approximately 1.1 to approximately 1.4, or in the interval from approximately 1.2 to approximately 1.3.

12. A method for cooling a heat-generating source in a wind turbine generator, the method comprising:
- providing a primary cooling circuit, the primary cooling circuit being a closed cooling circuit arranged for circulating a first fluid between the heat-generating source and a heat exchanger, and
- providing a secondary cooling circuit, the secondary cooling circuit being arranged for intake of a second fluid into the heat exchanger,
wherein the heat exchanger comprises a plurality of pipes for conveying the second fluid from the secondary cooling circuit through the heat exchanger, the plurality of substantially parallel pipes being arranged for heat exchange with a flow of the first fluid from the primary cooling circuit, and
wherein the secondary cooling circuit further comprises a dispersion chamber connected to the plurality of pipes, the dispersion chamber having a fluid intake being positioned sideways relative to the plurality of pipes so as to provide, at least partly, a levelling of the flow distribution across the plurality of pipes of the second fluid prior to heat exchange.

## Patentansprüche

1. Windkraftanlage, umfassend;
eine Wärmeerzeugungsquelle,
einen primären Kühlkreis, wobei der primäre Kühlkreis ein geschlossener Kühlkreis ist, beschaffen zum Umwälzen eines ersten Fluids zwischen der Wärmeerzeugungsquelle und einem Wärmetauscher, wobei die Windkraftanlage **dadurch gekennzeichnet ist, dass** sie weiterhin umfasst;
einen zweiten Kühlkreis, wobei der zweite Kühlkreis zur Aufnahme eines zweiten Fluids in den Wärmetauscher beschaffen ist,
wobei der Wärmetauscher eine Mehrzahl von Rohren zum Führen des zweiten Fluids des zweiten Kühlkreises durch den Wärmetauscher umfasst, wobei die Mehrzahl der im Wesentlichen parallelen Rohre für den Wärmeaustausch mit einem Strom des ersten Fluids des primären Kühlkreises beschaffen ist, und
wobei der zweite Kühlkreis weiterhin eine Dispersionskammer umfasst, die mit der Mehrzahl der Rohre verbunden ist, wobei die Dispersionskammer einen Fluideinlass aufweist, der seitlich im Vergleich zu der Mehrzahl der Rohre positioniert ist, um so vor dem Wärmeaustausch einen Ausgleich der Strömungsverteilung des zweiten Fluids in der Mehrzahl der Rohre zumindest teilweise bereitzustellen.

2. Windkraftanlage nach Anspruch 1, wobei die Dispersionskammer zum Umleiten des zweiten Fluids aus einer ersten Strömungsrichtung, die nicht parallel zu der Mehrzahl der Rohre ist, in eine zweite Strömungsrichtung, die der Richtung der Mehrzahl der Rohre entspricht, beschaffen ist.

3. Windkraftanlage nach Anspruch 1, wobei die Mehrzahl der Rohre im Wesentlichen orthogonal zu mindestens einem Teil des Stroms (P1, P2, P3) des ersten Fluids durch den Wärmetauscher angeordnet ist.

4. Windkraftanlage nach Anspruch 1, wobei ein Querschnitt der Mehrzahl der Rohre orthogonal zur Strömungsrichtung eine Form bildet, die von zwei Dimensionen unterschiedlicher Länge begrenzt ist, wobei der Einlass der Dispersionskammer neben der kürzeren der beiden Dimensionen angeordnet ist.

5. Windkraftanlage nach Anspruch 4, wobei die Strömungsrichtung des zweiten Fluids vor dem Eintritt in die Rohre im Wesentlichen entlang der längeren der beiden Dimensionen verläuft.

6. Windkraftanlage nach Anspruch 1, wobei der Fluideinlass außerhalb einer direkten Strömungsrichtung, die der Ausrichtung der Mehrzahl der Rohre entspricht, angeordnet ist.

7. Windkraftanlage nach Anspruch 6, wobei der Fluideinlass weiterhin im Wesentlichen parallel zu der Mehrzahl der Rohre ausgerichtet ist, wobei der Strom durch den zweiten Kreis **dadurch** vor dem Einstrom in die Mehrzahl der Rohre des Wärmetauschers ein im Wesentlichen orthogonales Strömungsmuster bildet.

8. Windkraftanlage nach Anspruch 1, wobei sich der Einlass des primären Kühlkreises in den Wärmetauscher an einer im Vergleich zum Auslass des primären Kühlkreises aus den Wärmetauscher gegenüberliegenden Position in Bezug auf die Dispersionskammer befindet.

9. Windkraftanlage nach Anspruch 1, wobei das erste und/oder das zweite Fluid aus einer Gruppe aus Luft, inertem Gas und Kühlflüssigkeit stammen.

10. Windkraftanlage nach Anspruch 1, wobei das zweite Fluid ein Gas ist, das mithilfe von Gasbewegungsmitteln durch den sekundären Kühlkreis getrieben wird.

11. Windkraftanlage nach Anspruch 1, wobei ein mittleres Verhältnis (F) der Zwischenräume (L_c) zwischen der Mehrzahl der Rohre und einem Durchmesser (D_O) des Rohrs im Bereich von etwa 1,1 bis etwa 1,4 oder im Bereich von etwa 1,2 bis etwa 1,3 liegt.

12. Verfahren zum Kühlen einer Wärmeerzeugungsquelle in einer Windkraftanlage, wobei das Verfahren umfasst:
- bereitstellen eines primären Kühlkreises, wobei der primäre Kühlkreis ein geschlossener Kühlkreis ist, beschaffen zum Umwälzen eines ersten Fluids zwischen der Wärmeerzeugungsquelle und einem Wärmetauscher, und
- Bereitstellen einen zweiten Kühlkreises, wobei der zweite Kühlkreis zur Aufnahme eines zweiten Fluids in den Wärmetauscher beschaffen ist,
wobei der Wärmetauscher eine Mehrzahl von Rohren zum Führen des zweiten Fluids des zweiten Kühlkreises durch den Wärmetauscher umfasst, wobei die Mehrzahl der im Wesentlichen parallelen Rohre für den Wärmeaustausch mit einem Strom des ersten Fluids des primären Kühlkreises beschaffen ist, und wobei der zweite Kühlkreis weiterhin eine Dispersionskammer umfasst, die mit der Mehrzahl der Rohre verbunden ist, wobei die Dispersionskammer einen Fluideinlass aufweist, der seitlich im Vergleich zu der Mehrzahl der Rohre positioniert ist, um so vor dem Wärmeaustausch einen Ausgleich der Strömungsverteilung des zweiten Fluids in der Mehrzahl der Rohre zumindest teilweise bereitzustellen.

## Revendications

1. Génératrice éolienne comprenant :
une source productrice de chaleur,
un circuit de refroidissement primaire, le circuit de refroidissement primaire étant un circuit de refroidissement fermé conçu pour faire circuler un premier fluide entre la source productrice de chaleur et un échangeur de chaleur, la génératrice éolienne étant **caractérisée en ce qu'**elle comprend en outre :
un circuit de refroidissement secondaire, le circuit de refroidissement secondaire étant conçu pour faire pénétrer un deuxième fluide dans l'échangeur de chaleur,
dans laquelle l'échangeur de chaleur comprend une pluralité de canalisations pour transporter le deuxième fluide provenant du circuit de refroidissement secondaire au travers de l'échangeur de chaleur, la pluralité de canalisations essentiellement parallèles étant conçue pour échanger de la chaleur avec un écoulement du premier fluide provenant du circuit de refroidissement primaire, et
dans laquelle le circuit de refroidissement secondaire comprend en outre une chambre de dispersion raccordée à la pluralité de canalisations, la chambre de dispersion possédant une entrée de fluide positionnée latéralement par rapport à la pluralité de canalisations de manière à assurer, au moins en partie, une égalisation de la répartition de l'écoulement du deuxième fluide entre la pluralité de canalisations avant l'échange de chaleur.

2. Génératrice éolienne selon la revendication 1, dans laquelle la chambre de dispersion est conçue pour dévier le deuxième fluide d'une première direction d'écoulement, qui n'est pas parallèle à la pluralité de canalisations, vers une deuxième direction d'écoulement qui correspond à la direction de la pluralité de canalisations.

3. Génératrice éolienne selon la revendication 1, dans laquelle la pluralité de canalisations est essentiellement orthogonale, au moins en partie, à l'écoulement (P1, P2, P3) du premier fluide au travers de l'échangeur de chaleur.

4. Génératrice éolienne selon la revendication 1, dans laquelle une section transversale de la pluralité de canalisations, orthogonale à la direction d'écoulement, constitue une forme traversée par deux dimensions de longueur inégale, l'entrée de la chambre de dispersion étant positionnée à côté de la plus courte des deux dimensions.

5. Génératrice éolienne selon la revendication 4, dans laquelle la direction d'écoulement du deuxième fluide avant son entrée dans les canalisations suit essentiellement la plus longue des deux dimensions.

6. Génératrice éolienne selon la revendication 1, dans laquelle ladite entrée de fluide est positionnée à l'extérieur d'une direction d'écoulement direct correspondant à l'orientation de la pluralité de canalisations.

7. Génératrice éolienne selon la revendication 6, dans laquelle ladite entrée de fluide est en outre orientée essentiellement parallèlement à ladite pluralité de canalisations, l'écoulement au travers du deuxième circuit formant ainsi une configuration d'écoulement essentiellement orthogonale avant l'entrée dans la pluralité de canalisations de l'échangeur de chaleur.

8. Génératrice éolienne selon la revendication 1, dans laquelle l'entrée du circuit de refroidissement primaire dans l'échangeur de chaleur est située en un point opposé à la sortie du circuit de refroidissement primaire de l'échangeur de chaleur par rapport à la chambre de dispersion.

9. Génératrice éolienne selon la revendication 1, dans laquelle le premier et/ou le deuxième fluide sont/est compris dans le groupe suivant : air, gaz inerte et liquide de refroidissement.

10. Génératrice éolienne selon la revendication 1, dans laquelle le deuxième fluide est un gaz forcé au travers du circuit de refroidissement secondaire par un moyen de déplacement de gaz.

11. Génératrice éolienne selon la revendication 1, dans laquelle un rapport moyen (F) entre une distance de séparation (L_c) entre la pluralité de canalisations et un diamètre (D_O) de la canalisation se situe dans l'intervalle allant d'environ 1,1 à environ 1,4, ou dans l'intervalle allant d'environ 1,2 à environ 1,3.

12. Méthode de refroidissement d'une source productrice de chaleur dans une génératrice éolienne, la méthode comprenant :
- apport d'un circuit de refroidissement primaire, le circuit de refroidissement primaire étant un circuit de refroidissement fermé conçu pour faire circuler un premier fluide entre la source productrice de chaleur et un échangeur de chaleur, et
- apport d'un circuit de refroidissement secondaire, le circuit de refroidissement secondaire étant conçu pour faire pénétrer un deuxième fluide dans l'échangeur de chaleur,
dans laquelle l'échangeur de chaleur comprend une pluralité de canalisations pour transporter le deuxième fluide provenant du circuit de refroidissement secondaire au travers de l'échangeur de chaleur, la pluralité de canalisations essentiellement parallèles étant conçue pour échanger de la chaleur avec un écoulement du premier fluide provenant du circuit de refroidissement primaire, et
dans laquelle le circuit de refroidissement secondaire comprend en outre une chambre de dispersion raccordée à la pluralité de canalisations, la chambre de dispersion possédant une entrée de fluide positionnée latéralement par rapport à la pluralité de canalisations de manière à assurer, au moins en partie, une égalisation de la répartition de l'écoulement du deuxième fluide entre la pluralité de canalisations avant l'échange de chaleur.
